# EUROPEAN PATENT SPECIFICATION

(11) **EP 0 673 593 B1**
(45) Date of publication and mention of the grant of the patent: **26.08.1998**
(21) Application number: 94301886.1
(22) Date of filing: 16.03.1994
(51) Int. Cl.: A01D 17/06, A01D 33/08, A01B 29/04, B65G 45/00

(54) **Method and apparatus for conveying crop or the like**
Verfahren und Vorrichtung um Hackfrüchternte zu Fördern
Méthode et appareil pour transporter des récoltes

(43) Date of publication of application: 27.09.1995
(73) Proprietor: R J HERBERT ENGINEERING LTD, Wisbech,Cambs PE14 7DJ (GB)
(72) Inventor: Herbert, Roderic Joseph, Wisbech, Cambs PE14 7DJ (GB)
(74) Representative: Archer, Philip Bruce

(56) References cited:
- EP-A- 0 280 399
- EP-A- 0 294 903
- BE-A- 861 618
- DE-B- 1 169 183
- FR-A- 2 520 334
- GB-A- 857 827
- GB-A- 2 017 536

## Description

This invention relates to a method and apparatus for conveying or cleaning crop or the like. An example of the use of the invention is the cleaning of a harvested potato crop. The invention may find application to many other such crops and may be used in crop and the like conveyors in any situation where it is desired to remove soil or crop material or other material from conveyor elements. One application of the invention would be for use in a potato or like crop harvester.

Prior disclosures to which attention is drawn include :
US-A-2,261,893 (Wolfard), GB-A-754,400 (Christensen), EP-A-0, 410,807 (Pearson), GB-A-2,232,866 (Pearson) and GB-A-2,222,507 (Pearson).

None of the above specifications provides any relevant teaching in relation to the cleaning of spiral roller conveyor elements in crop or the like conveying apparatus.

BE 861 618 discloses cleaning elements for a roller grid or screen which comprise cleaning scrapers mounted on supporting arms, which extend between adjacent gaps between the discs of the rollers to remove debris there from.

Fr-A-252 0 334 which discloses the features of the preamble of claim 1 discloses a cleaning device for archimedean screws comprising a plurality of scraping blades having the profile of the turns and in contact there with together with a means of freeing the blades from the turns and then for re-engaging said blades between the turns.

GB-A-857 827 discloses a device for lifting crops such as potatoes and beets having rotatable helices for conveying the crop but which does not provide any relevant teaching in relation to the cleaning of such rotatable helices but rather than the removal of soil from the crop itself.

In the case of crop or the like conveying apparatus employing driveable spiral roller conveyor elements the problem arises that soil and other waste material tends to become lodged or to accumulate in or on the spirals of the conveyor elements and as a result efficiency of the conveyor and the effectiveness of its cleaning action is reduced. We have identified a need for improvements in this respect, or generally.

According to the invention there is provided crop or the like conveying or cleaning apparatus and a method of conveying or cleaning crop or the like as defined in the accompanying claims.

In an embodiment of the invention there is provided crop or the like conveying apparatus in which driveable spiral roller conveyor elements are each provided with a plurality of projections mounted adjacent these conveyor elements at intervals along the length thereof so as to mesh with the spirals to remove material there from. In this way a convenient cleaning action is performed on the roller conveyor elements.

Likewise in the embodiment, the projections are mounted on a shaft, arranged to be rotated and driven in the opposite direction to the roller conveyor elements and are constructed of a resilient material. In this way the projections are provided with a simple means for giving them the necessary positive cleaning action. This is accentuated by the opposite direction of rotation of the projections. Moreover, provision of these in resilient form enables them to snap or click-over successive portions of the spiral rotating conveyor elements as cleaning progresses. This action has an inherent cleaning effect on the co-operating parts and contributes to the overall cleaning effect.

In the embodiment, the projections are disposed spirally about the axes of rotation of the shaft-mounting thereof. In this way a progressive cleaning action is provided which can be disposed in a somewhat timed relationship to the helical or spiral turns of the roller conveyor element in question. The drive for the projections may be arranged to rotate them at from 5 to 30% slower than the roller conveyor elements, and preferably at 7.5% to 12.5% slower. As a result of this speed differential, the projections have a progressive cleaning action on successive portions of the spiral structure.

Also in the embodiment, the projections have a finger-like form with an inclined or leading inclination having regard to their direction of rotation, thereby producing a somewhat aggressive cleaning action. This can be considered as resulting in the foreign matter being picked out from the roller rather than being pushed inwards.

As regards the outward or radial extent of the projections from their shaft or other mounting, this is arranged in relation to the roller conveyor elements so that the projections extend into the spiral form thereof by an amount such that they enter the space between the spiral element itself but do not quite reach the central shaft thereof.

An embodiment of the invention will now be described by way of example with reference to the accompanying drawings in which :
Fig 1 shows a side elevation view of a portion of crop or the like conveying apparatus comprising a series of spiral roller conveyor elements mounted on a lazy tongs device and a series of co-operating shafts carrying projections;
Fig 2 shows a section through the apparatus of Fig 1 taken on the line II-II showing a portion of the axial length of the apparatus including one of said projections and the corresponding portion of the spiral roller conveyor element; and
Fig 3 shows a modification of the embodiment of Fig 2.

As shown in the drawings crop conveying apparatus 10 comprises a series of driveable spiral roller conveyor elements 12 and an associated series of shafts 14 carrying projections 16. The projections are mounted adjacent the roller conveyor elements at intervals along the lengths thereof so as to mesh with the spirals to remove material thereform.

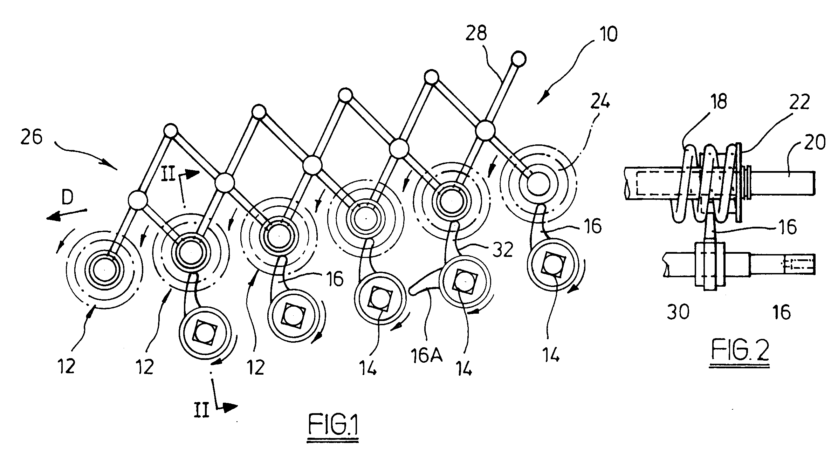

Roller conveyor elements 12 each comprise a spiral element 18 of helical form seen in Fig 2 and driveably mounted on a central shaft 20 and provided with an end plate 22 at each of the opposite axial ends thereof. Between spiral element 18 and shaft 20 there is an otherwise unoccupied space 24 into which projections 16 project.

A lazy tongs device 26 is provided to adjust the spacing between roller conveyor elements 12. The lazy tongs device is actuated by a thrust device (not shown) such as a ram connected to an end actuating arm 28 and provides a convenient means for adjusting the spacing between the rollers whereby the cleaning action which they exert on crop material passing thereover is altered. Corresponding adjustment means may be provided for the shafts 14 and their corresponding projections, or not, since the degree of spacial adjustment of the roller conveyor elements 12 need not be so great as to have the result that the movement of the roller conveyor elements extends beyond the zones in which the projections 16 are effective.

Projections 16 are mounted on the shafts 14 as shown in Fig 2 through individual hubs 30 suitably keyed to the square-section shafts. The shafts 14, and indeed the shafts 20, are mounted in end bearings (not shown) and are driveably coupled together by pinions or the like so as to rotate in opposite directions.

The directions of rotation are indicated in Fig 1 ie the finger 16 rotate in the opposite direction to the roller conveyor elements 12. The conveying direction for crop passing over apparatus 10 is indicated by arrow D in Fig 1.

Projections 16 are in the form of fingers moulded in a resilient material such as natural or synthetic rubber or another suitable polymer. Their general form is seen in Fig 1 in which it can be seen that they are inclined slightly forwards in the direction of rotation so as to have a more aggressive action than if they were of trailing form. The leading edge 32 is of concave profile.

Fingers 16 are disposed at spaced intervals along shaft 14. As shown at 16A in Fig 1, successive ones of the fingers are disposed at angularly offset positions so that the succession of fingers describes a spiral extending around the axis of the respective shaft 14.

The drive for shafts 14 and 20 is arranged to rotate these shafts at different speeds. The shafts 14 rotate at a lower rate of rotation than the shafts 20, preferably in the range from 5 to 30% slower, and optimally between 7.5% and 12.5% slower. By virtue of the difference in speed of rotation, the projections progressively act on successive portions of the spiral periphery of the elements 18. The axis of shafts 14 and 20 are generally parallel.

In use, crop material is conveyed in direction D over the roller conveyor elements 12. Unwanted material passes between successive roller elements through the gaps.

As the roller conveyor elements rotate, fingers 16 mesh therewith in a contra-rotating action. As the fingers pass through the rotating spiral elements 18, the screwing action of the latter causes the fingers to be deflected more and more until each one is obliged to click or snap over the spiral element into the next gap therein. As the fingers pass through the helix of the spiral element they exert a significant cleaning action.

Amongst other modifications which could be made in the above embodiment are the following. Firstly, the fingers 16 could rotate in the same direction as the rollers 12, but the cleaning action would be expected to be less effective. Secondly, the form and number of such fingers could be varied considerably, and likewise the choice of material therefore is open to considerable variation. If desired, the fingers 16 could be arranged to be rotated by the rotary action of the spiral elements 18 themselves. In such a case, the axes of rotation of the fingers would probably need to be adjusted from the parallel relationship shown in the drawings to a somewhat different disposition. The fingers 16 could be moulded or otherwise formed and in some circumstances it might be desirable to provide more than one such projection or finger at any one given axial location.

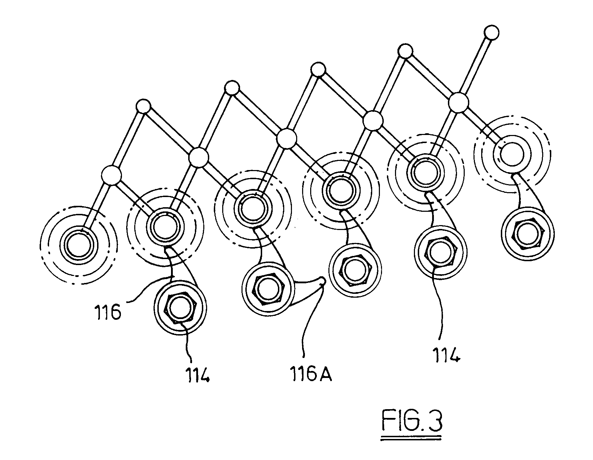

In the embodiment of Fig 3 all details of the construction and arrangement are otherwise substantially as described above, and therefore will not be repeated, except as follows.

In this embodiment, parts corresponding to those of Figs 1 and 2 have the same reference numerals, but increased by 100. Thus, projections or fingers 16 become 116 etc.

In this embodiment, shafts 114 are of hexagonal section. This polygonal form permits simpler indexing of the fingers around the shaft for assembly purposes.

As regards the fingers 116, it will be noted that these are constructed to have a trailing profile with respect to their direction of rotation so as to have a less aggressive cleaning action. It has been found that this is to be preferred in many instances, particularly with respect to many types of potato crop.

## Claims

1. Crop or the like conveying or cleaning apparatus (10) comprising;
(a) at least one driveable spiral roller conveyor element (12);
(b) a plurality of projections (16) mounted at intervals along the length of at least one shaft (14);
(c) said shaft (14) being adapted to rotate; and
(d) said projections (16) being arranged so as to mesh or co-operate with said spiral (12) to remove waste material therefrom which has become lodged or otherwise accumulated therein or thereon;
characterised in that;
(e) said projections (16) are constructed from a resilient material.

2. Apparatus according to claim 1 characterised by a drive being provided to rotate said projections (16) in the opposite direction to the direction of rotation of said roller conveyor element (12).

3. Apparatus according to claim 2 characterised by the axes of rotation of said projections (16) and of said roller conveyor (12) element being disposed generally parallel to each other.

4. Apparatus according to claim 2 characterised by said projections (16) being disposed spirally about the axes of rotation of said shaft (14).

5. Apparatus according to claim 2 characterised by said drive being adapted to rotate said projections (16) at a different speed from the rate of rotation of said roller conveyor element (12).

6. Apparatus according to claim 5 characterised by said drive being adapted to rotate said projections (16) at a speed of from 5% to 30% slower than said roller conveyor element (12).

7. Apparatus according to any one of the preceding claims characterised by said projections (16) being of finger-like form.

8. Apparatus according to claim 7 characterised by said fingers being inclined rearwards with respect to their own direction of rotation.

9. Apparatus according to any one of the preceding claims characterised by a plurality of said roller conveyor elements (12) disposed alongside each other to provide said conveying apparatus (10) and each having its own series of said projections (16) mounted to mesh with the spiral roller conveyor element (12) thereof.

10. A method of conveying crop or the like comprising driving a spiral roller conveyor element (12), mounting a plurality of resilient projections (16) at intervals along the length of a shaft (14) and rotating said shaft causing said projections (16) to mesh with said spiral (12) so as to remove material therefrom.

## Patentansprüche

1. Förder- oder Reinigungsgerät (10) für Erntegut oder ähnliches mit ;
(a) mindestens einem angetriebenen spiraligen Förderrollenelement (12);
(b) mehreren in Abständen längs mindestens einer Welle (14) befestigten Vorsprüngen (16);
(c) wobei die Welle (14) zum Rotieren geeignet ist;
(d) die Vorsprünge (16) zum Eingreifen oder Zusammenwirken mit der Spirale (12) angeordnet sind, um auf dieser abgelagerte oder sonstwie in oder auf dieser angesammelte Abfallstoffe zu entfernen,
dadurch **gekennzeichnet**, daß
(e) die Vorsprünge (16) aus elastischem Material gebildet sind.

2. Gerät nach Anspruch 1, **gekennzeichnet** durch einen zum Rotieren der Vorsprünge (16) in die der Rotationsrichtung des Förderrollenelements (12) entgegengesetzte Richtung vorgesehenen Antrieb.

3. Gerät nach Anspruch 2, dadurch **gekennzeichnet**, daß die Rotationsachsen der Vorsprünge (16) und des Förderrollenelements (12) weitgehend parallel zueinander angeordnet sind.

4. Gerät nach Anspruch 2, dadurch **gekennzeichnet**, daß die Vorsprünge (16) auf einer Spirallinie um die Rotationsachsen der Welle (14) angeordnet sind.

5. Gerät nach Anspruch 2, dadurch **gekennzeichnet**, daß der Antrieb zum Rotieren der Vorsprünge (16) bei einer von der Rotationsgeschwindigkeit des Förderrollenelements (12) unterschiedlichen Geschwindigkeit geeignet ist.

6. Gerät nach Anspruch 5, dadurch **gekennzeichnet**, daß der Antrieb zum Rotieren der Vorsprünge (16) mit einer um 5% bis 30% geringeren Geschwindigkeit als die des Förderrollenelements (12) geeignet ist.

7. Gerät nach einem der vorhergehenden Ansprüche, dadurch **gekennzeichnet**, daß die Vorsprünge (16) eine fingerähnliche Form haben.

8. Gerät nach Anspruch 7, dadurch **gekennzeichnet**, daß die Finger bezüglich ihrer eigenen Rotationsrichtung rückwärts geneigt sind.

9. Gerät nach einem der vorhergehenden Ansprüche, **gekennzeichnet** durch mehrere mit ihren Längsseiten nebeneinander angeordnete Förderrollenelemente (12) zum Bilden des Fördergerätes (10), wobei jedes Förderrollenelement eine eigene Reihe befestigter Vorsprünge (16) hat, die mit dem jeweiligen spiraligen Förderrollenelement (12) in Eingriff kommen.

10. Verfahren zum Fördern von Erntegut oder ähnlichem, mit Antreiben eines spiraligen Förderrollenelements (12), Befestigen mehrerer elastischer Vorsprünge (16) in Abständen längs einer Welle (14) und Rotieren der Welle, wodurch die Vorsprünge (16) mit der Spirale (12) in Eingriff kommen um von dieser Material zu entfernen.

## Revendications

1. Appareil de transport ou de nettoyage de récolte ou analogue (10), comprenant :
(a) au moins un élément transporteur à rouleau hélicoÏdal entraînable (12) ;
(b) une pluralité de saillies (16) montées à intervalles sur la longueur d'au moins un arbre (14) ;
(c) ledit arbre (14) pouvant tourner ; et
(d) lesdites saillies (16) étant agencées de façon à engrener ou coopérer avec ladite hélice (12) pour en retirer les débris qui se sont coincés ou accumulés d'une autre façon dans ou sur ladite hélice ;
caractérisé en ce que :
(e) lesdites saillies (16) sont fabriquées en une matière élastique.

2. Appareil suivant la revendication 1, caractérisé en ce qu'il comprend un entraînement prévu pour faire tourner lesdites saillies (16) dans le sens opposé au sens de rotation dudit élément transporteur à rouleau (12).

3. Appareil suivant la revendication 2, caractérisé en ce que les axes de rotation desdites saillies (16) et dudit élément transporteur à rouleau (12) sont disposés sensiblement parallèlement l'un à l'autre.

4. Appareil suivant la revendication 2, caractérisé en ce que lesdites saillies (16) sont disposées hélicoÏdalement autour des axes de rotation dudit arbre (14).

5. Appareil suivant la revendication 2, caractérisé en ce que ledit entraînement est prévu pour faire tourner lesdites saillies (16) à une vitesse différente de la vitesse de rotation dudit élément transporteur à rouleau (12).

6. Appareil suivant la revendication 5, caractérisé en ce que ledit entraînement est prévu pour faire tourner lesdites saillies (16) à une vitesse inférieure de 5% à 30% à celle dudit élément transporteur à rouleau (12).

7. Appareil suivant une quelconque des revendications précédentes, caractérisé en ce que lesdites saillies (16) sont en forme de doigt.

8. Appareil suivant la revendication 7, caractérisé en ce que lesdits doigts sont inclinés vers l'arrière par rapport à leur propre sens de rotation.

9. Appareil suivant une quelconque des revendications précédentes, caractérisé en ce qu'une pluralité de dits éléments transporteurs à rouleau (12) sont disposés mutuellement côte à côte pour constituer ledit appareil de transport (10), et chaque élément possède sa propre série dedites saillies (16) montées de façon à engrener avec son élément transporteur à rouleau hélicoïdal (12).

10. Procédé de transport de récolte ou analogue, comprenant l'entraînement d'un élément transporteur à rouleau hélicoïdal (12), le montage d'une pluralité de saillies élastiques (16) à intervalles sur la longueur d'un arbre (14), et la mise en rotation dudit arbre de sorte que lesdites saillies (16) engrènent avec ladite hélice (12) afin d'en retirer les débris de matière.
